# EUROPEAN PATENT SPECIFICATION

(11) **EP 2 116 322 B1**
(45) Date of publication and mention of the grant of the patent: **25.01.2012**
(21) Application number: 08738579.5
(22) Date of filing: 14.04.2008
(51) Int. Cl.: B23K 11/11, B23K 11/00, B62D 25/04, B23K 33/00

(54) **WORKPIECE TO BE SPOT-WELDED**
WERKSTÜCK FÜR PUNKTSCHWEISSUNG
PIÈCE À SOUDER PAR POINTS

(30) Priority: 26.06.2007 JP 2007167262
(43) Date of publication of application: 11.11.2009
(73) Proprietor: Honda Motor Co., Ltd., Minato-ku Tokyo 107-8556 (JP)
(72) Inventor: YASUKATA, Hitomi, Wako-shi Saitama 351-0193 (JP); FUJII, Kanji, Wako shi Saitama 351-0193 (JP); SEKINE, Kosuke, Wako shi Saitama 351-0193 (JP)
(74) Representative: Trossin, Hans-Jürgen
(86) International application number: PCT/JP2008/000973
(87) International publication number: WO 2009/001498

(56) References cited:
- JP-A- 07 172 344
- JP-U- 59 060 050

## Description

The present invention relates to a plurality of work pieces that are joined together by spot welding. A combination of work pieces according to the preamble of claim 1 is known from JP-U-59 60050.

### BACKGROUND OF THE INVENTION

A vehicle body such as an automotive body typically includes a center pillar located between a front door and a rear door on each side of the vehicle body as an important part of a vehicle body framework. A center pillar typically includes a pair of work pieces located on the outboard side and inboard side of the vehicle body in a mutually opposing relationship and joined to each other by spot welding the side edges thereof so as to define a rectangular closed cross section. To facilitate the spot welding process, at least one of the work pieces is provided with flanges for spot welding along either side edge thereof (see Japanese patent laid open publication No. 06-278466).

When spot welding such a flange of a work piece to the other work piece which may be provided with a corresponding flange, it is necessary to perform spot welding at a plurality of locations arranged along the length of the flange, and the locations of spot welding are required to be specifically determined so that a desired welding strength may be achieved. Conventionally, to guide a welder to perform spot welding at such selected locations with a required accuracy, it was practiced to form dents or recesses that serve as markers for a welder at pre-selected locations during the preceding stamping process.

However, if such dents or recesses are excessively deep and/or extensive, they may reduce the mechanical strength of such parts (see JP-A-7 172344), and are therefore typically so small that a welder may have some difficulty in recognizing them. Also, the spot welding may be performed from the inboard side or outboard side depending on the facilities of the assembly plant and the particular welding procedure, and there may be some difficulty in ensuring the quality of the welding work depending on from which side the welding is performed.

### BRIEF SUMMARY OF THE INVENTION

### TASK TO BE ACCOMPLISHED BY THE INVENTION

In view of such problems of the prior art, a primary object of the present invention is to provide work pieces provided with marks for determining locations for spot welding which are easy to recognize, and simplifies the task of managing the quality of welding work.

### MEANS FOR ACCOMPLISHING THE TASK

According to the present invention, such a task can be accomplished by providing a combination of work pieces according to claim 1.

Thus, according to the present invention, highly recognizable marks for indicating locations for spot welding can be formed by the wavy shape of the lateral flange of the first work piece. As opposed to dents or recesses which cannot be deep enough to be readily recognizable owing to the limit in the thickness of the work piece, the wavy shape may be of such dimensions as to permit required recognizability without reducing the mechanical strength of the welded parts or the affected work piece. To provide a margin for the positional precision of each location for welding, each peak may include a flattened straight section having a certain length corresponding to a designated area for spot welding.

For avoiding any ill effect from a notch sensitivity that could be caused by the wavy shape of the edge of the lateral flange, each dip may be defined by an arcuate segment having a concave side directed outward, and the straight section of each peak may be smoothly connected to the adjacent dip via an arcuate segment having a convex side directed outward.

If dents or recesses for marking spot welded locations are formed on a side of the second work piece facing away from the first work piece, the locations for spot welding can be recognized not only from the side of the first work piece but also from the side of the second work piece.

The present invention is particularly advantageous, not limitatively, when spot welding the parts of a monocoque vehicle body surrounding door openings.

### BRIEF DESCRIPTION OF THE DRAWINGS

Now the present invention is described in the following with reference to the appended drawings, in which:
Figure 1 is an inboard side view of a vehicle body frame top which the present invention can be applied;
Figure 2 is an enlarged fragmentary perspective view of the part indicated by arrow II in Figure 1;
Figure 3 is a sectional view taken along line III-III of Figure 2 to show how an opening trim can be fitted on the edge of the welded panel assembly; and
Figure 4 is an enlarged fragmentary view of a part of Figure 2.

### DETAILED DESCRIPTION OF THE PREFERRED EMBODIMENTS

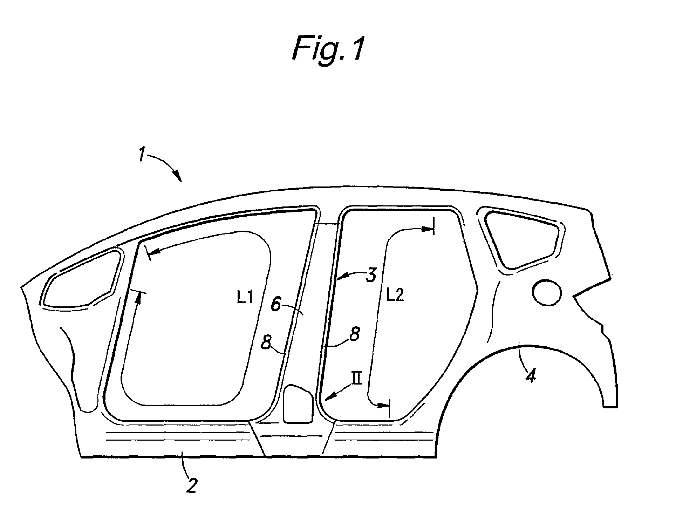

Referring to Figure 1, the illustrated vehicle body frame 1 comprises a side sill 2 extending in a lower part of each side part thereof in a fore-and-aft direction. The illustrated vehicle body frame 1 is that of a four-door passenger car, and includes a center pillar 3 located between a pair of openings for a front door and a rear door.

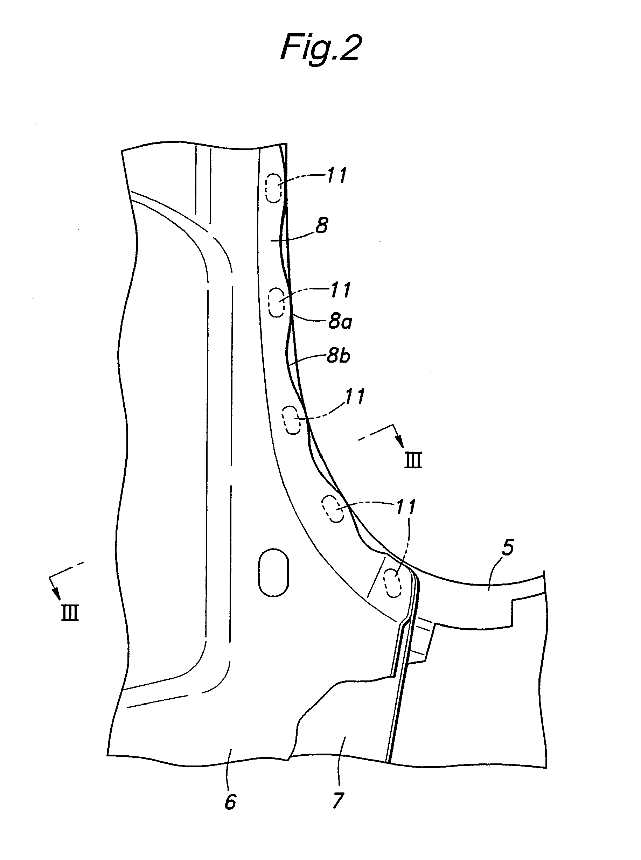

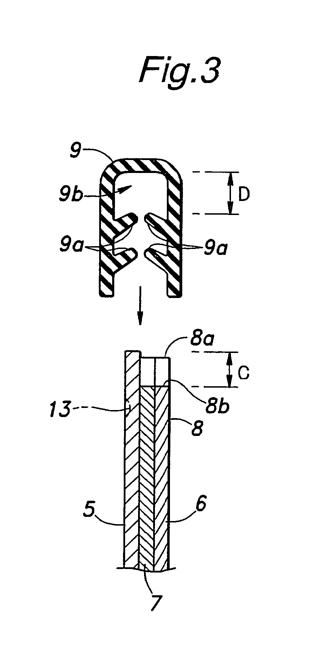

As shown in Figure 2, the center pillar 3 comprises a pair of work pieces or a center pillar outer 5 forming a part of an outer side panel 4 and a center pillar inner 6 placed onto the center pillar outer 5 from the inboard side thereof. As shown in Figure 3, a center pillar stiffener 7 is interposed between the center pillar outer 5 and center pillar inner 6.

In the illustrated embodiment, the spot welding for the inner and outer frame members surrounding the door openings including the parts for the center pillar is performed along a part of the edge of the front door opening indicated by L1 in Figure 1 and along a part of the edge of the rear door opening indicated by L2 in Figure 1.

The center pillar inner 6 is generally spaced away from the stiffener 7, but is provided with a flange 8 which is bent to the outboard side with respect to the remaining part of the center pillar inner 6 along the edges indicated by L1 and L2 in Figure 1. The flange 8 is closely placed onto the stiffener 7 which is in turn closely placed onto the center pillar outer 5.

The flange 8 is provided with an outer edge given with a wavy profile as best illustrated in Figure 2 while the outer edge of the center pillar outer 5 is substantially linear or slightly curved as required by the designed outer profile of the finished center pillar. The outer edge of each peak of the wavy edge profile of the flange 8 substantially coincides with the outer edge of the center pillar outer 5. Each dip of the wavy edge profile of the flange 8 is set back by a distance from the peaks 8a of the wavy edge profile of the flange 8 as illustrated in Figure 3. In the illustrated embodiment, the edge of the stiffener 7 is substantially conformal with the wave edge of the flange 8 of the center pillar inner 6. However, the edge of the stiffener 7 may be substantially linear or slightly curved as required, and coincide with the outer edge of each peak of the wavy edge profile of the flange 8 or the outer edge of each dip of the wavy edge profile of the flange 8.

The edge of this assembly is fitted with an opening trim 9 (Figure 3) in a work process following the spot welding process, and the opening trim 9 includes a slot 9b defined by a pair of mutually opposing walls for receiving the edge of this assembly and a pair of mutually opposing clamping lips 9a formed on the mutually opposing walls. The distance C between the edge of this assembly (which may be an outer edge of the peaks 8a of the flange 8 of the center pillar inner 6 or the outer edge of the center pillar outer 5) and the dips 8b is selected such that a clamping lip 9a of the opening trim 9 is resiliently pushed against the surface of the center pillar inner 6 when the opening trim 9 is attached. In other words, the clamping lips 9a are spaced from a bottom of the slot by a distance D greater than the distance C between the edge of the assembly and the dips 8b of the lateral flange 8 (D>C). In Figure 2, the peaks 8a of the lateral flange 8 are offset from the edge of the center pillar outer 5 in a somewhat exaggerated manner, and this offset may be extremely small in reality. These two edges may substantially coincide with each other. Therefore, the distance C substantially corresponds to the depth of the dips 8b. If the distance C is excessive, the clamping lips 9a may fall into a dip 8b when the opening trim 9 is attached to the edge of the flange 8. If it is the case, the opposing clamping lips 9a designed to clamp the center pillar outer 5 and center pillar inner 6 from both sides may not provide an adequate clamping force to hold the opening trim 9 in place. By selecting the distance C at an appropriate level as discussed above, the clamping lips 9a are prevented from falling into a dip 8b when the opening trim 9 is attached to the flange 8, and the mutually opposing clamping lips 9a are enabled to clamp the center pillar outer 5 and center pillar inner 6 without fail so that the opening trim 9 is prevented from being dislodged from the flange 8.

The flange 8 of the center pillar inner 6 is thus given with a wavy formed edge as discussed above, and the peaks 8a provide a guide for selecting the locations 11 for performing the spot welding as illustrated in Figure 2. As opposed to the small dents used in the conventional arrangement, the welder is enabled to identify the locations for spot welding both clearly and precisely. The flange 8 is provided for the convenience of spot welding, and is therefore not required to have a uniform width in parts where spot welding is not performed to ensure a required mechanical strength as long as the parts to which the opening trims 9a are attached are given with a necessary thickness. The wavy form of the edge of the flange 8 satisfies such requirements, and the removal of the material of the center pillar inner 6 to form the dips 8b of the wavy form contributes to the reduction in the weight of the center pillar inner 6.

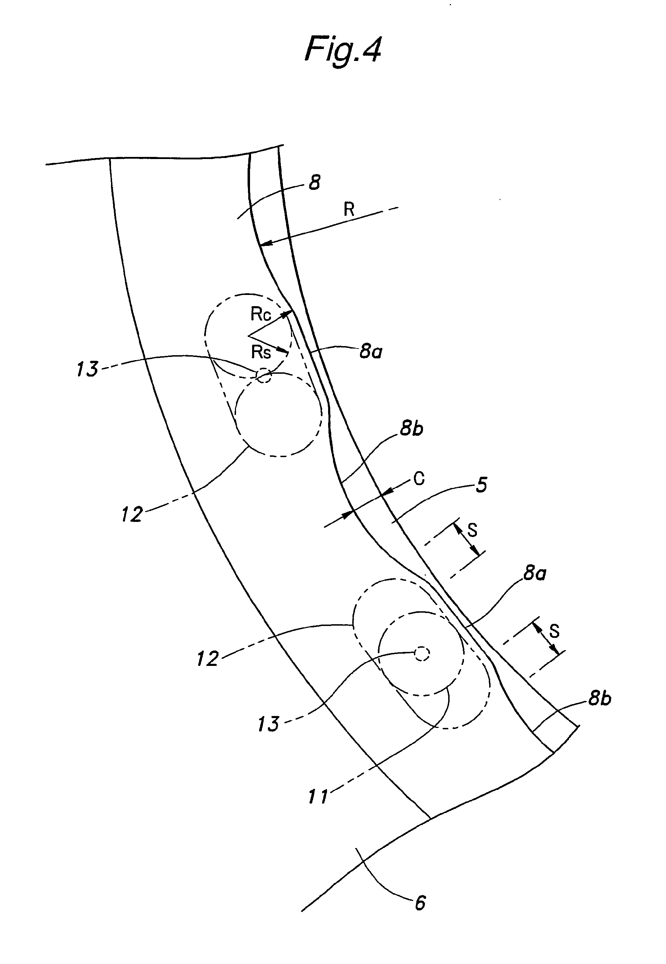

A specific example of the wavy form is given in Figure 4. Each location for spot welding (which is selected according to a particular spot welding plan) is selected at a midpoint between two adjacent peaks 8a, but is designated as an area 12 for spot welding by considering a tolerance S for a positional error along the length of the flange 8. In the example illustrated in Figure 4, for each given location 11 for spot welding, a track-shaped area defined by a pair of mutually circumscribing circles (having a radius of Rs) arranged along the length of the flange 8 and centered around the spot welding location defines an area 12 for spot welding.

Each peak 8a of the wavy shaped edge may be flattened and extend by a length corresponding to the length of the straight section of the track shape as illustrated in Figure 2. Each dip 8b may be formed by an arcuate segment (having a curvature radius of R) having a desired depth as measured from the straight sections. The transitional segment extending between each straight section and the adjacent dip 8b may be defined by a circle having a radius of Rc concentric to the corresponding one of the aforementioned circles having the radius Rs, Rc being given as a sum of the radius Rs and a desired margin of tolerance. For instance, the radius of each basic circle Rs may be 5 mm, and the radius Rc for an added margin may be 6 (5+1) mm. In other words, each dip 8b includes an arcuate segment having a concave side directed outward, and the straight section of each peak is smoothly connected to the adjacent dip via an arcuate segment having a convex side directed outward.

By thus forming the peaks 8a and dips 8b of the wavy shape of the edge of the flange 8 with moderate arcuate segments (having the radii of curvature of Rs and Rc) in addition to the straight sections, the edge is given with a smooth profile so that cracks owing to stress concentration are prevented from developing at the time of a vehicle crash. The locations for spot welding can be readily determined from the locations of the peaks 8a and the welding work can be performed by visually noting the locations of the peaks 8a so that the welding work can be simplified. Also, because each peak 8a is defined so as to correspond to a spot welding area having a certain expanse and provide a certain positional tolerance, it can be readily determined that each spot welded locations is selected to design, and the quality control of the spot welding part can be simplified.

Because the wave shaped edge is formed in such manner that the edge of the flange includes peaks 8a and dips 8b in an alternating manner as seen in the plane of the flange, it can be easily formed by trimming the corresponding edge of the center pillar inner 6 in a corresponding manner during the stamping process. Therefore, providing markings for spot welding work does not involve additional manufacturing step or an increase in the amount of work.

In the illustrated embodiment, as shown in Figure 3, a plurality of dents 13 are provided on the outboard side of the center pillar outer 5. Depending on the facility of the assembly plant and/or the procedure of the welding work, the welding may have to be performed from both the outboard and inboard sides. The wave shape of the edge of the flange of the center pillar inner may be used as a marking when welding from the inboard side, and the dent 13 may be used as a marking when welding from the outboard side.

Typically, the interior of a vehicle body is dimmer than the outside because the lighting is more readily available for work outside of the vehicle body. Therefore, the dents 13 may be adequate as a marking for the spot welding work performed from outside the vehicle body. The wavy shaped edge provides a more readily discernible marking for the spot welding work which is often required to be performed under a dimmer condition.

The foregoing embodiment was directed to a center pillar 3, but the present invention is by no means limited to a center pillar but may also be applied to any work pieces that are spot welded as long as at least one of the work pieces is provided with a flange and the two work pieces are spot welded to each other via the flange.

Although the present invention has been described in terms of preferred embodiments thereof, it is obvious to a person skilled in the art that various alterations and modifications are possible without departing from the scope of the present invention which is set forth in the appended claims.

## Claims

1. A combination of a pair of work pieces that are joined together by spot welding;
wherein the work pieces include a first work piece (6) provided with a lateral flange (8) including an edge; a second work piece (5) including a part laid over the lateral flange (8) of the first work piece (6) and spot welded to the lateral flange (8) at a plurality of locations (11);
the combination further comprising an opening trim (9) which includes a slot (9b) defined by a pair of mutually opposing walls for receiving the edge of the lateral flange (8) of the first work piece (6) and the part of the second work piece (5) spot welded to the flange (8) and a pair of mutually opposing clamping lips (9a) formed on the mutually opposing walls; **characterized in that** the edge of the lateral flange (8) is provided with a wavy shape including a plurality of peaks (8a) and dips (8b) in an alternating manner, and spot welded locations (11) are located in the peaks (8a) of the edge of the lateral flange (8);
wherein a distance (C) between an edge of the peaks (8a) of the lateral flanges (8) and/or the spot welded part of the work piece (5) and the dips (8b) of the lateral flange (8) is selected such that a clamping lip (9a) of the opening trim (9) is resiliently pushed against the surface of the first work piece (6) when the opening trim (9) is attached such that the clamping lips (9) are spaced from a bottom of the slot by a distance greater than that between an edge of the peaks (8a) of the lateral flanges (8) and/or the spot welded part of the work piece (5) and the dips (8b) of the lateral flange (8).

2. The combination according to claim 1, wherein each peak (8a) includes a flattened straight section having a certain length corresponding to a designated area for spot welding.

3. The combination according to claim 1, wherein each dip (8b) includes an arcuate segment having a concave side directed outward.

4. The combination according to claim 2, wherein each dip (8b) includes an arcuate segment having a concave side directed outward, and the straight section of each peak (8a) is smoothly connected to the adjacent dip (8b) via an arcuate segment having a convex side directed outward.

5. The combination according to claim 1, wherein dents (13) or recesses for marking spot welded locations are formed on a side of the second work piece (5) facing away from the first work piece (6).

6. The combination according to claim 1, wherein the work pieces (5, 6) include a center pillar outer (5) and a center pillar inner (6).

7. The combination according to claim 5, wherein the second work piece (5) forms an exterior member of a vehicle body, and the first work piece (6) forms an interior member of the vehicle body.

## Patentansprüche

1. Kombination eines Paars von Werkstücken, die durch Punktschweißung miteinander verbunden sind;
worin die Werkstücke enthalten: ein erstes Werkstück (6), das mit einem einen Rand enthaltenden seitlichen Flansch (8) versehen ist; ein zweites Werkstück (5), das ein Teil enthält, das auf dem seitlichen Flansch (8) des ersten Werkstücks (6) liegt und an einer Mehrzahl von Stellen an den seitlichen Flansch (8) punktgeschweißt ist;
wobei die Kombination ferner eine offene Einfassung (9) aufweist, die einen Schlitz (9b), der durch ein Paar von einander gegenüber liegenden Wänden definiert ist, um den Rand des seitlichen Flanschs (8) des ersten Werkstücks (6) und das an den zweiten Flansch (8) punktgeschweißte Teil des zweiten Werkstücks (5) aufzunehmen, sowie ein Paar von einander gegenüberliegenden Klemmlippen (9a), die an den einander gegenüberliegenden Wänden ausgebildet sind, enthält;
**dadurch gekennzeichnet, dass** der Rand des seitlichen Flanschs (8) mit einer welligen Form versehen ist, die ein Paar von abwechselnden Erhöhungen (8a) und Vertiefungen (8b) enthält, und die punktgeschweißten Stellen (11) in den Erhöhungen (8a) des Rands des seitlichen Flanschs (8) angeordnet sind,
worin ein Abstand (C) zwischen einem Rand der Erhöhungen (8a) der seitlichen Flansche (8) und/der des punktgeschweißten Teils des Werkstücks (5) und den Vertiefungen (8b) des seitlichen Flanschs (8) derart ausgewählt ist, dass eine Klemmlippe (9a) der offenen Einfassung (9) federnd gegen die Oberfläche des ersten Werkstücks (6) gedrückt wird, wenn die offene Einfassung (9) derart angebracht ist, dass die Klemmlippen (99) vom Boden des Schlitzes mit einem größeren Abstand angeordnet sind als jenem zwischen einem Rand der Erhöhungen (8a) der seitlichen Flansche (8) und/oder des punktgeschweißten Teil des Werkstücks (5) und den Vertiefungen (8b) des seitlichen Flanschs (8).

2. Die Kombination nach Anspruch 1, worin jede Erhöhung (8a) einen abgeflachten geraden Abschnitt mit einer gewissen Länge enthält, die einem zur Punktschweißung bestimmten Bereich entspricht.

3. Die Kombination nach Anspruch 1, worin jede Vertiefung (8b) ein bogenförmiges Segment enthält, das eine nach außen weisende konkave Seite hat.

4. Die Kombination nach Anspruch 2, worin jede Vertiefung (8b) ein bogenförmiges Segment enthält, das eine nach außen weisende konkave Seite hat, und der gerade Abschnitt jeder Erhöhung (8a) über ein bogenförmiges Segment, das eine nach außen weisende konvexe Seite hat, glattgängig mit der benachbarten Vertiefung (8b) verbunden ist.

5. Die Kombination nach Anspruch 1, worin Kerben (13) oder Vertiefungen zur Markierung von punktgeschweißten Stellen an einer Seite des zweiten Werkstücks (5b) ausgebildet sind, die von dem ersten Werkstück (6) weg weist.

6. Die Kombination nach Anspruch 1, worin die Werkstücke (5, 6) ein Mittelsäulenaußenelement (5) und ein Mittelsäuleninnenelement (6) enthalten.

7. Die Kombination nach Anspruch 5, worin das zweite Werkstück (5) ein Außenelement eines Fahrzeugkörpers bildet, und das erste Werkstück (6) ein Innenelement des Fahrzeugkörpers bildet.

## Revendications

1. Combinaison d'une paire de pièces de fabrication qui sont jointes ensemble par soudage par points ;
dans laquelle les pièces de fabrication incluent une première pièce de fabrication (6) pourvue d'une bride latérale (8) incluant un bord ; une seconde pièce de fabrication (5) incluant une partie étendue sur la bride latérale (8) de la première pièce de fabrication (6) et soudée par points sur la bride latérale (8) en une pluralité d'emplacements (11) ;
la combinaison comprenant en outre une entaille d'ouverture (9) qui inclut une fente (9b) définie par une paire de parois mutuellement opposées pour recevoir le bord de la bride latérale (9) de la première pièce de fabrication (6) et la partie de la seconde pièce de fabrication (5) soudée par points sur la bride (8) et une paire de lèvres de serrage mutuellement opposées (9a) formées sur les parois mutuellement opposées ; **caractérisée en ce que** le bord de la bride latérale (8) est pourvu d'une forme ondulée incluant une pluralité de pics (8a) et de vallées (8b) de manière alternée, et des emplacements soudés par points (11) sont situés dans les pics (8a) du bord de la bride latérale (8) ; dans lequel une distance (C) entre un bord des pics (8a) des brides latérales (8) et/ou la partie soudée par points de la pièce de fabrication (5) et les vallées (8b) de la bride latérale (8) est choisie de sorte qu'une lèvre de serrage (9a) de l'entaille d'ouverture (9) est poussée de façon élastique contre la surface de la première pièce de fabrication (6) lorsque l'entaille d'ouverture (9) est fixée de telle sorte que les lèvres de serrage (9) sont espacées d'un fond de la fente d'une distance supérieure à celle entre un bord des pics (8a) des brides latérales (8) et/ou la partie soudée par points de la pièce de fabrication (5) et les vallées (8b) de la bride latérale (8) .

2. Combinaison selon la revendication 1, dans laquelle chaque pic (8a) inclut une section droite aplatie ayant une certaine longueur correspondant à une aire désignée pour le soudage par points.

3. Combinaison selon la revendication 1, dans laquelle chaque vallée (8b) inclut un segment arqué ayant un côté concave dirigé à l'extérieur.

4. Combinaison selon la revendication 2, dans laquelle chaque vallée (8b) inclut un segment arqué ayant un côté concave dirigé à l'extérieur, et la section droite de chaque pic (8a) est reliée de façon régulière à la vallée (8b) adjacente via un segment arqué ayant un côté convexe dirigé vers l'extérieur.

5. Combinaison selon la revendication 1, dans laquelle des enfoncements (13) ou des évidements permettant de marquer des emplacements soudés par points sont formés sur un côté de la seconde pièce de 30 fabrication (5) en regard à distance de la première pièce de fabrication (6).

6. Combinaison selon la revendication 1, dans laquelle les pièces de fabrication (5, 6) incluent un externe de pied milieu (5) et un interne de pied milieu (6).

7. Combinaison selon la revendication 5, dans laquelle la seconde pièce de fabrication (5) forme un organe extérieur d'une carrosserie de véhicule, et la première pièce de fabrication (6) forme un organe intérieur de la carrosserie de véhicule.
